(19) Europäisches Patentamt / European Patent Office / Office européen des brevets

(11) **EP 3 224 115 B1**

(12) **FASCICULE DE BREVET EUROPEEN**

(45) Date de publication et mention de la délivrance du brevet:
**13.11.2019 Bulletin 2019/46**

(21) Numéro de dépôt: **15817937.4**

(22) Date de dépôt: **16.11.2015**

(51) Int Cl.:
**B62D 6/00** *(2006.01)* **B60W 30/02** *(2012.01)*
**B60W 40/00** *(2006.01)* **B60W 40/068** *(2012.01)*

(86) Numéro de dépôt international:
**PCT/FR2015/053086**

(87) Numéro de publication internationale:
**WO 2016/083702 (02.06.2016 Gazette 2016/22)**

(54) **DÉTECTEUR DE SOUS-VIRAGE ET DE SURVIRAGE POUR VÉHICULE AUTOMOBILE**

UNTERSTEUERUNGS- BZW. ÜBERSTEUERUNGSDETEKTOR FÜR EIN KRAFTFAHRZEUG

UNDERSTEER OR OVERSTEER DETECTOR FOR AUTOMOBILE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.11.2014 FR 1461464**

(43) Date de publication de la demande:
**04.10.2017 Bulletin 2017/40**

(73) Titulaire: **JTEKT Europe
69540 Irigny (FR)**

(72) Inventeurs:
• **MICHELIS, André
38121 Chonas L'Amballan (FR)**
• **RAVIER, Christophe
69780 Saint Pierre de Chandieu (FR)**
• **MOULAIRE, Pascal
69890 La Tour de Salvagny (FR)**

(74) Mandataire: **Chevalier, Renaud Philippe et al
Cabinet Germain & Maureau
BP 6153
69466 Lyon Cedex 06 (FR)**

(56) Documents cités:
**WO-A1-2004/005093 DE-A1-102010 007 615
DE-A1-102010 030 173**

**Description**

La présente invention se rapport au domaine général de l'analyse et de la gestion du comportement dynamique d'un véhicule, tel qu'un véhicule automobile.

La présente invention concerne plus particulièrement un procédé de détection de situations de perte d'adhérence capable d'identifier une situation de sous-virage ou de survirage (c'est-à-dire une situation de perte d'adhérence dans laquelle une perte d'adhérence du train avant du véhicule se traduit par un sous-virage, et/ou respectivement une situation de perte d'adhérence dans laquelle une perte d'adhérence du train arrière du véhicule se traduit par un survirage).

Il est connu de surveiller le comportement d'un véhicule afin de pouvoir détecter l'apparition d'une situation de perte d'adhérence, par exemple de manière à permettre au système de direction assistée qui équipe le véhicule d'intervenir automatiquement pour corriger un comportement sous-vireur du véhicule, ce qui permet d'améliorer la tenue de route du véhicule en virage et par conséquent la sécurité des occupants dudit véhicule et celle des autres usagers de la route. WO 2004/005093 A1 est considéré comme le document illustrant l'état de la technique le plus proche et divulgue un procédé selon le préambule de la revendication 1.

Toutefois, la mise en œuvre d'une telle surveillance se révèle parfois complexe, dans la mesure où il est généralement nécessaire d'ajouter au véhicule des capteurs spécifiquement dédiés à la collecte des informations dynamiques utiles, ce qui augmente le coût, l'encombrement et le poids du dispositif assurant la surveillance du comportement du véhicule.

En outre, le processus de surveillance fait généralement appel à des calculs qui peuvent être relativement longs et complexes, ce qui peut, dans certains cas, affecter la réactivité ou encore la fiabilité dudit processus de surveillance.

Les objets assignés à l'invention visent par conséquent à remédier aux inconvénients susmentionnés et à proposer un nouveau procédé de détection d'une situation de perte d'adhérence d'un véhicule qui soit simple et peu coûteux à mettre en œuvre, tout en permettant un diagnostic précis, rapide et fiable du comportement du véhicule.

Les objets assignés à l'invention sont atteints au moyen d'un procédé de détection d'une situation de perte d'adhérence d'un véhicule pourvu d'un système de direction manœuvré par un volant de conduite, ledit procédé étant caractérisé en ce qu'il comprend une étape (a) d'évaluation d'un premier indicateur de perte d'adhérence au cours de laquelle on calcule comme premier indicateur de perte d'adhérence la dérivée partielle, par rapport à une variable représentative de la position angulaire du volant de conduite, d'un paramètre de roulage qui est représentatif de la vitesse de lacet du véhicule.

En d'autres termes, l'invention propose avantageusement d'utiliser la dérivée partielle de la vitesse de lacet du véhicule par rapport à la position angulaire du volant de conduite (ou « angle volant »), c'est-à-dire le rapport entre la variation élémentaire de la vitesse de lacet sur un court laps de temps et la variation élémentaire correspondante de la position angulaire du volant de conduite, considérée sur le même laps de temps, comme indicateur du comportement du véhicule (en matière d'adhérence à la route), et plus particulièrement comme moyen de caractériser, et donc de détecter, l'apparition d'un comportement sous-vireur ou survireur, caractéristique d'une perte d'adhérence.

Avantageusement, les inventeurs ont en effet constaté qu'il existait une corrélation entre la position angulaire (réelle) du volant de conduite, la vitesse de lacet, et la situation d'adhérence, et qu'il était possible d'exprimer et de distinguer de manière graphique les situations d'adhérence et de perte d'adhérence d'un véhicule, sous forme de domaines qui occupent des aires distinctes au sein d'un même repère représentant la vitesse de lacet (en ordonnées) en fonction de la position angulaire du volant (en abscisses).

Les frontières de ces domaines graphiques, qui caractérisent les limites auxquelles s'opèrent les changements de la situation d'adhérence du véhicule, et plus particulièrement qui caractérisent les conditions d'apparition d'un comportement sous-vireur ou survireur, suivent des tracés (typiquement des droites) qui peuvent être avantageusement caractérisés par leurs tangentes, tangentes qui correspondent en l'espèce à la valeur de la dérivée partielle de la vitesse de lacet par rapport à la position angulaire du volant, au point considéré dans le repère susmentionné.

Le calcul et l'étude d'un (premier) indicateur formé par une telle dérivée partielle permet donc d'établir, de manière fiable, dans quel domaine se trouve le véhicule à un instant considéré, ce qui renseigne sur la situation d'adhérence dudit véhicule.

De façon particulièrement avantageuse, l'analyse proposée par l'invention, à savoir l'évaluation d'une situation d'adhérence à partir de la dérivée partielle de la vitesse de lacet par rapport à la position angulaire du volant, permet en pratique de détecter de façon précoce une situation de perte d'adhérence, et plus particulièrement d'identifier, de manière anticipée, l'apparition de conditions, annonciatrices, et transitoires, qui précèdent une perte d'adhérence significative.

Le procédé permet donc, le cas échéant, de décider automatiquement et particulièrement tôt, alors que le véhicule est encore contrôlable, d'une réaction appropriée, destinée à permettre au véhicule de reprendre de l'adhérence ou plus simplement destinée à éviter que ledit véhicule ne perde de l'adhérence (ou le cas échéant ne perde davantage d'adhérence), et d'appliquer automatiquement cette réaction au dispositif de direction assistée, alors que le véhicule est encore contrôlable, soit pour corriger directement et automatiquement la configuration de la direction afin de retrouver de l'adhérence, soit pour avertir, de préférence tactilement, le conducteur afin d'inciter ledit conducteur à corriger lui-même la trajectoire du véhicule pour éviter, stopper, ou remédier à, une perte d'adhérence.

La sécurité des occupants du véhicule s'en trouve donc accrue.

En outre, la vitesse d'exécution et la fiabilité du procédé sont renforcées par le fait que le calcul et l'analyse du premier indicateur (c'est-à-dire de la dérivée partielle) font intervenir des expressions mathématiques simples, ainsi que des données (vitesse de lacet, angle volant) qui sont directement disponibles ou aisément déterminables au sein de tout dispositif de direction assistée.

Le procédé selon l'invention peut donc être mis en œuvre de manière simple, efficace, et à moindre coût.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

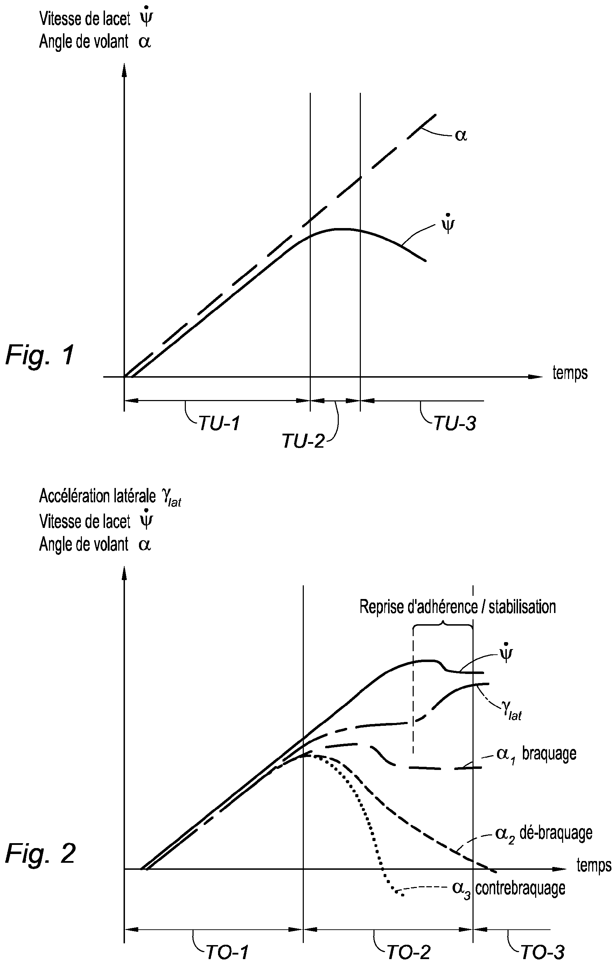

La figure 1 illustre, de façon schématique, l'évolution temporelle de la position angulaire du volant et de la vitesse de lacet lors de l'apparition et du déroulement d'une situation de sous-virage.

La figure 2 illustre, de façon schématique, l'évolution temporelle de la position angulaire du volant, de la vitesse de lacet et de l'accélération latérale du véhicule en situation de survirage, en distinguant plusieurs scenarii selon que le conducteur accentue le braquage, ramène le volant vers sa position centrale, ou contrebraque pour reprendre de l'adhérence.

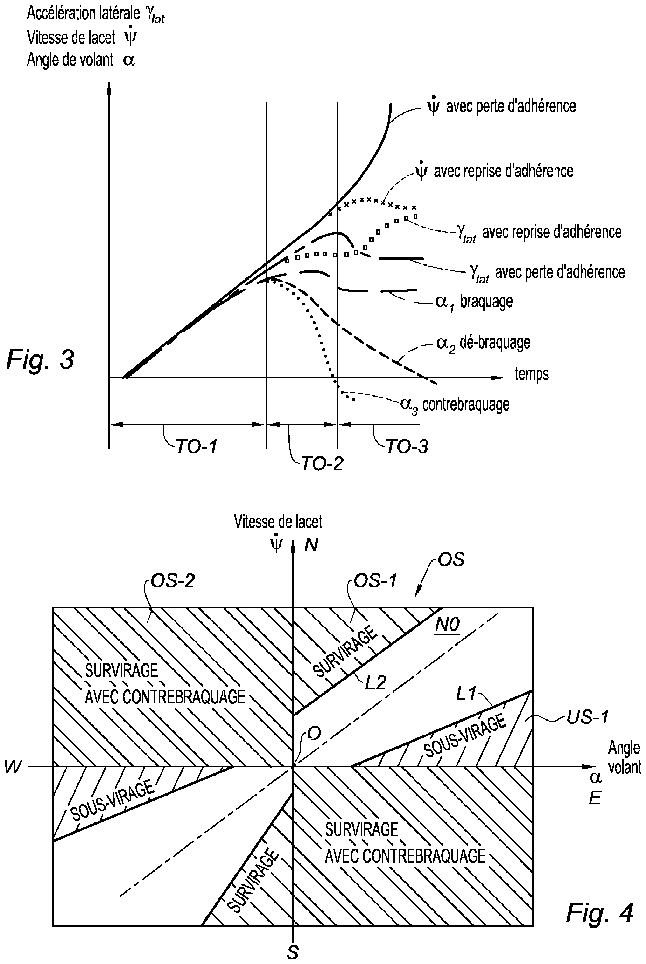

La figure 3 illustre, de façon schématique, sur un diagramme analogue à celui de la figure 2, l'évolution temporelle de la position angulaire du volant, de la vitesse de lacet et de l'accélération latérale du véhicule en situation de survirage avec perte d'adhérence du train arrière (tête-à-queue).

La figure 4 illustre, au sein d'un repère à quatre quadrants représentant la vitesse de lacet (en ordonnées) en fonction de la position angulaire du volant (en abscisses), les domaines associés aux différentes situations d'adhérence d'un véhicule, et plus particulièrement aux différentes situations de survirage et de sous-virage.

La présente invention concerne un procédé de détection d'une situation de perte d'adhérence d'un véhicule, véhicule qui est pourvu d'un système de direction, et plus préférentiellement d'un système de direction assisté, manœuvré par un volant de conduite.

Plus particulièrement, l'invention concerne un procédé de détection d'une situation de perte adhérence lors d'une prise de virage (ou plus globalement lors d'un braquage de la direction), c'est-à-dire typiquement un procédé de détection d'une situation de sous-virage ou d'une situation de survirage.

Bien entendu, l'invention concerne également un dispositif estimateur, du genre circuit électronique, carte électronique, calculateur (ordinateur), automate programmable, ou tout autre dispositif équivalent, destiné à mettre en œuvre un tel procédé.

On notera qu'un tel dispositif estimateur pourra présenter une structure de commande physique, liée au câblage de ses composants électroniques, et/ou, de préférence, une structure de commande virtuelle, définie par une programmation informatique appropriée.

De manière connue en soi, le système de direction assistée pourra comprendre un volant de conduite monté sur une colonne de direction et qui permet au conducteur de modifier l'angle de braquage (c'est-à-dire l'orientation en lacet) des roues directrices (par ailleurs de préférence motrices) du véhicule, par l'intermédiaire d'un mécanisme de direction comprenant de préférence une crémaillère de direction, qui est montée coulissante (de préférence selon une direction latérale transverse au véhicule) dans un carter de direction (lui-même solidaire du châssis du véhicule) et qui actionne des biellettes de direction reliées à des porte-fusées portant lesdites roues directrices. La colonne de direction engrènera de préférence sur la crémaillère au moyen d'un pignon d'entraînement

Le système de direction assistée comprendra également un moteur d'assistance, de préférence électrique, agencé pour exercer sur le mécanisme de direction, le cas échéant par l'intermédiaire d'un réducteur du genre réducteur à roue tangente et vis sans fin, un effort de manœuvre, et plus particulièrement un couple de manœuvre, qui sera déterminé selon des lois d'assistance prédéfinies.

Le moteur d'assistance (et le cas échéant son réducteur) pourra notamment être agencé pour venir en prise sur la colonne de direction elle-même, de sorte à former de préférence un mécanisme dit « à simple pignon », ou bien sur la crémaillère de direction, séparément de la colonne de direction, pour former alors de préférence un mécanisme dit « à double pignon ».

Selon l'invention, le procédé comprend une étape (a) d'évaluation d'un premier indicateur de perte d'adhérence P1 au cours de laquelle on calcule, comme premier indicateur de perte d'adhérence P1, la dérivée partielle, par rapport à une variable $\alpha$ représentative de la position angulaire du volant de conduite, d'un paramètre de roulage qui est représentatif de la vitesse de lacet $\dot{\psi}$ du véhicule :

$$P1 = \frac{\partial \dot{\psi}}{\partial \alpha} \quad .$$

La variable a représentative de la position angulaire du volant de conduite, ou « angle volant », pourra être choisie parmi toute variable qui est en pratique représentative de (et plus particulièrement proportionnelle à, voire égale à) l'angle de braquage (instantané) du mécanisme de direction, et donc représentative de (et plus particulièrement proportionnelle à, voire égale à) la position angulaire (instantanée) du volant de conduite.

En pratique, et dans ce qui suit, ladite variable a sera donc de préférence assimilée à la position angulaire du volant.

Ladite variable $\alpha$ pourra être fournie par tout moyen approprié permettant de déterminer la position (réelle) absolue du mécanisme de direction, et plus particulièrement la position angulaire absolue du volant de conduite ou, de manière équivalente, la position angulaire absolue de l'arbre du moteur d'assistance ou la position absolue de la crémaillère.

On pourra ainsi envisager de mesurer la position angulaire $\alpha$ au moyen d'un capteur de position qui pourra être placé par exemple au niveau du volant, au niveau de la colonne de direction, ou bien au niveau de la crémaillère de direction.

Selon une autre possibilité préférentielle, la position angulaire du volant a sera obtenue à partir d'une mesure de la position angulaire de l'arbre du moteur d'assistance, mesure qui pourra être réalisée par exemple au moyen d'un capteur de type « resolver », de préférence intégré audit moteur d'assistance.

Selon cette autre possibilité, on pourra par exemple faire application d'une fonction de détermination de type « angle finding », tel que celle qui est décrite dans la demande de brevet FR-2 992 937 déposée par la demanderesse, et selon laquelle on ajoute à la mesure de la position relative multi-tours de l'arbre du moteur d'assistance un terme correctif (offset), qui est obtenu par une moyenne pondérée des écarts successivement constatés entre d'une part ladite mesure de position relative et d'autre part une estimation de la position absolue du volant, qui est obtenue par une étude du comportement dynamique du véhicule.

Par ailleurs, on pourra déterminer et utiliser comme paramètre de roulage représentatif de la vitesse (instantanée) de lacet $\dot{\psi}$ du véhicule toute grandeur qui est représentative de, et plus particulièrement proportionnelle à, voire égale à, la vitesse (instantanée) de lacet du véhicule, et dont l'évolution est comparable, et de préférence identique, à l'évolution de ladite vitesse de lacet $\dot{\psi}$.

Par commodité, on pourra par conséquent, sauf mention contraire, assimiler le paramètre de roulage à la vitesse de lacet $\dot{\psi}$ dans ce qui suit.

Ainsi, selon une possibilité préférentielle de mise en œuvre, le paramètre de roulage dont on calcule la dérivée partielle sera une mesure ou une estimation de la vitesse de lacet $\dot{\psi}$ du véhicule à l'instant considéré, qui pourra par exemple être fournie par un système de stabilisation électronique de trajectoire, de type « ESP ».

Le premier indicateur s'écrira alors, *stricto sensu :*

$$P1 = \frac{\partial \dot{\psi}}{\partial \alpha} \, .$$

Selon une autre possibilité, ledit paramètre de roulage dont on calcule la dérivée partielle pourra être la position angulaire théorique du volant de conduite (ou « angle volant théorique ») $\alpha_{\text{théorique}}$ obtenue à partir de l'angle d'Ackermann $\alpha_{\text{Ackermann}}$, c'est-à-dire la position angulaire du volant (et donc des roues) qui correspondrait, en l'absence de dérive, au comportement dynamique du véhicule que l'on observe à l'instant considéré.

Plus particulièrement, selon cette autre possibilité, on aura :

$$\dot{\psi} = \frac{V}{R}$$

avec

V la vitesse (longitudinale) du véhicule,
R le rayon de courbure instantané de la trajectoire du véhicule.

L'angle d'Ackermann (c'est-à-dire l'angle de lacet de la roue, considéré sans dérive du pneumatique) s'écrit :

$$\alpha_{Ackermann} = \frac{L}{R}$$

où L représente l'empattement du véhicule.

L'angle théorique correspondant du volant vaut alors :

$$\alpha_{théorique} = D \times \alpha_{Ackermann} = D \times \frac{L}{R}$$

avec D le facteur de démultiplication cinématique de la chaîne cinématique qui relie le volant de conduite aux roues (ici typiquement *via* la colonne de direction et la crémaillère sur laquelle engrène ladite colonne de direction).

En définitive, on obtient donc :

$$\alpha_{théorique} = \frac{\dot{\psi} \times D \times L}{V}$$

L'angle volant théorique $\alpha_{théorique}$ étant ici proportionnel à la vitesse de lacet $\dot{\psi}$, son évolution, notamment au regard de l'évolution de la position angulaire (réelle) a du volant de conduite, peut renseigner sur l'évolution de ladite vitesse de lacet $\dot{\psi}$ au regard de la position angulaire (réelle) a du volant de conduite.

De la sorte, la dérivée partielle correspondante $\dfrac{\partial \alpha_{theorique}}{\partial \alpha}$, et donc le premier indicateur P1 calculé à partir de ladite position angulaire théorique $\alpha_{théorique}$, peuvent être utilisés de manière sensiblement équivalente, dans le cadre de l'invention, à la dérivée partielle et au premier indicateur P1 obtenu, *stricto sensu,* à partir de la vitesse de lacet $\dot{\psi}$.

En d'autres termes, on pourra considérer que :

$$P1 = \frac{\partial \dot{\psi}}{\partial \alpha} \approx \frac{\partial \alpha_{theorique}}{\partial \alpha} .$$

Avantageusement, l'acquisition de la position angulaire (instantanée) du volant $\alpha$, et du paramètre (instantané) de roulage $\dot{\psi}$, $\alpha_{théorique}$, de même que le rafraîchissement du calcul du premier indicateur de perte d'adhérence P1, pourront être effectués sensiblement en temps réel, par exemple selon une période d'échantillonnage (période de rafraîchissement) $T_{éch}$ sensiblement comprise entre 1 ms et 100 ms (ce qui correspondra à une fréquence de rafraîchissement comprise entre 10 Hz et 1 kHz, voire supérieure).

En pratique, la dérivée partielle pourra être calculée en effectuant le quotient de la variation élémentaire du paramètre de roulage $\dot{\psi}$ entre deux instants successifs t1 et t2 proches (de préférence séparés d'une durée qui correspond à la période d'échantillonnage $T_{éch}$) d'une part et de la variation élémentaire correspondante de la position angulaire du volant $\alpha$ entre ces deux mêmes instants t1 et t2 :

$$P1 = \frac{\partial \dot{\psi}}{\partial \alpha} = \frac{\dot{\psi}(t2) - \dot{\psi}(t1)}{\alpha(t2) - \alpha(t1)} ,$$

avec de préférence t2-t1 = $T_{éch}$.

De façon particulièrement avantageuse, le calcul d'un premier indicateur P1 correspondant à la dérivée partielle du paramètre de roulage représentatif de la vitesse de lacet $\dot{\psi}$ par la position angulaire du volant $\alpha$ permet de définir un critère d'identification très simple des situations de survirage et de sous-virage, que l'on comprendra mieux en se reportant au graphique de la figure 4.

Sur ladite figure 4, on a représenté un repère à quatre quadrants, dont l'axe des abscisses correspond à la position angulaire du volant de conduite (« angle volant ») $\alpha$, et dont l'axe des ordonnées correspond à la vitesse de lacet $\dot{\psi}$ du véhicule.

Par commodité de description, on associera à ce repère, et donc aux quadrants, des points cardinaux, l'axe Sud-Nord correspondant à l'axe des ordonnées (parcouru dans le sens des vitesses de lacet croissantes), et l'axe Ouest-Est correspondant à l'axe des abscisses (parcouru dans le sens des angles volant croissants).

Dans ce repère, les différentes situations d'adhérence du véhicule apparaissent sous forme de domaines qui occupent des aires distinctes (non chevauchantes, mais mitoyennes).

Plus particulièrement, on distinguera :

- un domaine d'adhérence normale, noté N0, qui correspond à une situation dans laquelle le véhicule répond de façon normale et prévisible à la manœuvre de braquage, en s'engageant dans le virage correspondant sans perte d'adhérence ;
- un domaine de sous-virage, noté US-1 (pour « UnderSteering-1 »), qui correspond graphiquement au triangle inférieur Est-Nord-Est situé dans le quadrant Nord-Est ;
- un domaine de survirage, noté OS (pour « OverSteering »), qui comprend deux sous-domaines, à savoir d'une part un premier sous-domaine de survirage avec "dé-braquage", noté OS-1, qui correspond à une situation de survirage dans laquelle le conducteur manœuvre le volant de conduite en direction de sa position centrale (correspondant à la ligne droite) de sorte à réduire l'angle volant $\alpha$ et récupérer de l'adhérence, et qui correspond graphiquement au triangle supérieur Nord-Nord-Est, et d'autre part un second sous-domaine de survirage avec contrebraquage, noté OS-2, qui correspond à une situation de braquage avec contrebraquage, dans laquelle le conducteur actionne le volant de manière à orienter les roues dans le sens opposé au virage (c'est-à-dire inverse le signe de l'angle volant), et qui correspond graphiquement au rectangle du quadrant Nord-Ouest.

On notera que le graphique présente un aspect sensiblement symétrique (par rapport à son origine $\underline{O}$), dans la mesure où chaque domaine associé à une situation de virage à droite possède un domaine homologue correspondant à une situation de virage à gauche.

Les frontières L1, L2 (dites aussi « lignes de partage ») de ces domaines graphiques caractérisent les limites auxquelles s'opèrent les changements de la situation d'adhérence du véhicule, et plus particulièrement caractérisent les conditions d'apparition d'un comportement sous-vireur ou survireur.

Ainsi, en détectant que l'on s'approche, que l'on atteint et/ou que l'on franchit l'une de ces frontières, on peut déterminer l'imminence, ou l'apparition effective d'une situation de perte d'adhérence.

En outre, le procédé proposé permet avantageusement de diagnostiquer la nature de la situation de perte d'adhérence, c'est-à-dire qualifier précisément le type de perte d'adhérence, notamment en distinguant entre sous-virage et survirage, et le cas échéant entre survirage simple, avec maintien ou accentuation du braquage, survirage avec « dé-braquage », et survirage avec contrebraquage, comme cela sera détaillé ci-après.

En l'espèce, les lignes de partage L1, L2 des domaines susmentionnés suivent des tracés, ici typiquement des droites, qui peuvent être avantageusement caractérisés par leurs tangentes, lesdites tangentes étant ici typiquement représentatives des pentes desdites droites.

Or, de fait, l'orientation desdites tangentes, c'est-à-dire la pente des droites marquant les lignes de partage L1, L2, correspond en l'espèce à la valeur de la dérivée partielle de la vitesse de lacet par rapport à la position angulaire du volant, c'est-à-dire à la valeur prise, à l'instant considéré, par le premier indicateur P1, au point considéré dans le repère susmentionné.

Ledit premier indicateur P1 peut donc notamment constituer un indicateur (instantané), ou « estimateur », de sous-virage et/ou de survirage.

De préférence, le procédé comprend une étape (b) de diagnostic de sous-virage au cours de laquelle on compare la valeur du premier indicateur de perte d'adhérence P1 à un seuil de sous-virage prédéterminé Seuil_US, et l'on conclut à une situation de sous-virage (qui peut être une situation annonciatrice de sous-virage, correspondant à l'existence d'un risque imminent de sous-virage, ou bien une situation de sous-virage effectif) si la valeur dudit premier indicateur P1 est inférieure audit seuil de sous-virage Seuil_US.

En d'autres termes, on pourra poser comme condition de sous-virage, c'est-à-dire comme condition devant nécessairement être vérifiée pour que l'on puisse déduire que l'on se trouve en situation de sous-virage :

$$P1 = \frac{\partial \dot{\psi}}{\partial \alpha} < Seuil\_US$$

Graphiquement, ledit seuil de sous-virage Seuil_US correspondra à la pente de la première ligne de partage L1 (ici située dans le quadrant N-E) qui sépare le domaine normal N0 du domaine de sous-virage US-1.

En l'espèce, ladite première ligne de partage L1 est sécante à la partie positive de l'axe des abscisses, et représente une fonction affine croissante dans le quadrant N-E, de telle sorte que le domaine de sous-virage US-1 correspond à l'aire triangulaire qui est située sous ledit domaine normal N0, et plus particulièrement à l'aire qui est comprise entre l'axe des abscisses et ladite première ligne de partage L1.

On notera que, si l'on calcule le premier indicateur P1 à partir de l'angle de volant théorique $\alpha_{théorique}$, plutôt que de calculer ledit premier indicateur P1 directement à partir de la vitesse de lacet $\dot{\psi}$ *stricto sensu,* on pourra poser, de manière équivalente, une condition de sous-virage sous la forme :

$$P1 = \frac{\partial \alpha_{theorique}}{\partial \alpha} < Seuil\_US' ,$$

où Seuil_US' correspond au seuil de sous-virage.

On notera que le ou les seuils de sous-virage Seuil_US et Seuil_US', associés à la vitesse de lacet $\dot{\psi}$, et respectivement à l'angle de volant théorique $\alpha_{théorique}$, pourront de préférence être ajustés dynamiquement, sensiblement en temps réel, en fonction de la vitesse du véhicule.

Plus globalement, la cartographie des domaines correspondant aux différentes situations d'adhérence du véhicule, telle qu'elle est représentée sur la figure 4, pourra ainsi être évolutive, et voir son tracé (en l'espèce le tracé des frontières L1, L2 entre lesdits domaines) modifié en fonction de la vitesse (linéaire) du véhicule.

Toujours dans la volonté d'améliorer la précision et la fiabilité du procédé selon l'invention, le ou les seuils de sous-virage Seuil_US et Seuil_US', associés à la vitesse de lacet $\dot{\psi}$, et respectivement à l'angle de volant théorique $\alpha_{théorique}$, pourront de préférence être ajustés, éventuellement en sus de leur ajustement en fonction de la vitesse du véhicule, en fonction du couple volant qui est exercé par le conducteur sur le volant de conduite, afin de prendre en considération les effets de décalage entre la position angulaire du volant et la position angulaire réelle du reste du mécanisme de direction, et plus particulièrement entre l'angle du volant de conduite et l'angle de braquage des roues, effets de décalage qui sont induits par la déformation élastique du mécanisme de direction, et plus particulièrement par la déformation élastique en torsion de la barre de torsion qui est placée entre le volant de conduite et la colonne de direction afin de mesurer le couple volant.

En d'autres termes, le seuil de sous-virage Seuil_US, Seuil_US' pourra notamment prendre en considération la raideur (rapport entre effort subi et déformation correspondante) du mécanisme de direction, et plus particulièrement la raideur de la barre de torsion du capteur de couple volant.

On notera par ailleurs, que, pour conclure à l'apparition effective d'une situation de sous-virage, on pourra également prendre en considération, en sus du critère de comparaison de la dérivée partielle P1 au seuil de sous-virage Seuil_US, Seuil_US', un ou plusieurs autres critères complémentaires, tels que par exemple la valeur à l'instant considéré d'un taux de sous-virage représentatif de l'écart qui existe entre la position angulaire réelle du volant d'une part et la position angulaire théorique du volant, telle qu'elle devrait correspondre à la situation dynamique du véhicule (par exemple au regard de la vitesse mesurée des roues dudit véhicule) d'autre part.

Un tel taux de sous-virage pourra par exemple être calculé de la manière décrite dans la demande internationale WO-2010/070229 déposée par la demanderesse.

On remarquera que, avantageusement, la détection de sous-virage par le premier indicateur P1 permet, temporellement, de détecter une situation de sous-virage de façon précoce, avant que le véhicule ne devienne difficilement contrôlable - voire incontrôlable - du fait d'une perte significative d'adhérence du train avant.

En effet, en référence à la figure 1, on peut schématiquement décomposer le déroulement d'une situation de sous-virage en trois périodes successives, à savoir :

- une première période TU-1 de comportement normal, où la vitesse de lacet $\dot{\psi}$ croît de manière sensiblement analogue à l'angle volant a, ce qui indique que le véhicule répond au mouvement de braquage (c'est-à-dire à l'accentuation de l'angle volant) par une prise de virage,

- puis une seconde période TU-2 d'entrée en sous-virage, au cours de laquelle la courbe de la vitesse de lacet $\dot{\psi}$ s'infléchit, ce qui indique que ladite vitesse de lacet $\dot{\psi}$ n'augmente plus en proportion de l'angle volant $\alpha$ et que le véhicule ne répond donc plus aussi efficacement qu'auparavant au braquage, ce qui se traduit également par une régression du couple d'auto-alignement qui s'exerce sur les roues,

- puis enfin une troisième période TU-3 de perte d'adhérence au cours de laquelle la vitesse de lacet $\dot{\psi}$ diminue alors même que l'angle volant $\alpha$ continue d'augmenter, ce qui indique un « décrochage » du train avant du véhicule, le véhicule tournant de moins en moins alors même que le conducteur braque de plus en plus.

Or, le franchissement, par le premier indicateur P1 (c'est-à-dire par la dérivée partielle susmentionnée), du seuil de sous-virage Seuil_US se produit justement au moment de la seconde période TU-2, et plus particulièrement au début de ladite seconde période TU-2 d'entrée en sous-virage, c'est-à-dire avant toute perte d'adhérence significative, et alors que le véhicule est encore contrôlable.

Cette coïncidence permet donc de détecter très tôt l'apparition d'un risque de sous-virage.

Par ailleurs, selon une caractéristique préférentielle qui peut constituer une invention à part entière, et qui peut notamment être mise en œuvre de manière alternative ou complémentaire à l'étape (b) de diagnostic de sous-virage, le procédé selon l'invention comprend une étape (c) de diagnostic de survirage au cours de laquelle on compare la valeur du premier indicateur de perte d'adhérence P1 à un premier seuil de survirage prédéterminé Seuil_OS_1, et l'on conclut à une situation de survirage (qui peut être une situation annonciatrice de survirage, correspondant à l'existence d'un risque imminent de survirage, ou bien une situation de survirage effectif) si la valeur du premier indicateur P1 est supérieure audit premier seuil de survirage Seuil_OS_1.

En d'autres termes, on pourra poser comme condition de survirage, c'est-à-dire comme condition devant nécessairement être vérifiée pour que l'on puisse déduire que l'on se trouve en situation de survirage : $P1 > Seuil\_OS\_1$

Le premier seuil de survirage Seuil_OS_1 pourra avantageusement être fixé par un réglage en usine ou en atelier, lors d'essais de mise au point du système de direction et/ou du véhicule.

En outre, de manière analogue à ce qui a été décrit plus haut en référence au seuil de sous-virage Seuil_US, le premier seuil de survirage Seuil_OS_1 pourra de préférence être ajusté dynamiquement, sensiblement en temps réel, en fonction de la vitesse du véhicule et/ou en fonction du couple volant exercé par le conducteur sur le volant de conduite.

Graphiquement, le seuil de survirage Seuil_OS_1 correspondra à la pente de la seconde ligne de partage L2 (ici située dans le quadrant N-E) qui sépare le domaine normal N0 du domaine de survirage OS, et plus particulièrement du sous-domaine de survirage avec « dé-braquage » OS-1, sensiblement à l'opposé du domaine de sous-virage US-1 par rapport à la bissectrice du repère (bissectrice qui est représentée en trait mixte sur la figure 4).

En l'espèce, ladite seconde ligne de partage L2 est sécante à la partie positive de l'axe des ordonnées, et représente une fonction affine croissante dans le quadrant N-E, de telle sorte que le domaine de survirage OS, et plus particulièrement le sous-domaine de survirage avec « dé-braquage » OS-1, correspond à l'aire triangulaire qui est située au-dessus dudit domaine normal N0, et plus particulièrement à l'aire qui est comprise entre l'axe des ordonnées et ladite seconde ligne de partage L2.

Ici encore, de même que pour la détection d'un sous-virage, l'utilisation du premier indicateur P1 à dérivée partielle (non temporelle) permet avantageusement une détection précoce d'une situation de survirage.

En référence aux figures 2 et 3, on peut en effet schématiquement décomposer le déroulement d'une situation de survirage en trois périodes successives, à savoir :

- tout d'abord une première période TO-1 de comportement normal, où la vitesse de lacet $\dot{\psi}$ (représentée en trait plein sur lesdites figures 2 et 3) croît de manière sensiblement analogue à l'angle volant a, ce qui indique que le véhicule répond fidèlement au mouvement de braquage (c'est-à-dire à l'accentuation de l'angle volant) par une prise de virage et un maintien normal dans ledit virage,
- puis une seconde période TO-2 d'entrée en survirage, au cours de laquelle la vitesse de lacet $\dot{\psi}$ commence à augmenter davantage que l'angle volant a, ce qui indique que le véhicule tend à sur-réagir au braquage, c'est-à-dire que ledit véhicule tend à tourner sur lui-même (autour de son axe de lacet) pour adopter globalement une trajectoire de virage plus incurvée que le souhaiterait le conducteur,
- puis enfin une troisième période TO-3 de perte d'adhérence au cours de laquelle la vitesse de lacet $\dot{\psi}$ augmente rapidement en divergeant de l'angle volant a, tandis que, en l'espèce, l'accélération latérale $\gamma_{lat}$ poursuit sa chute ou se maintient à une valeur relativement basse, ce qui indique un « décrochage » du train arrière du véhicule, le véhicule partant en tête-à-queue.

Or, le franchissement, par le premier indicateur P1 (c'est-à-dire par la dérivée partielle susmentionnée), du seuil de survirage Seuil_OS_1 se produit justement au moment de la seconde période TO-2, et plus particulièrement au début de ladite seconde période, c'est-à-dire avant toute perte d'adhérence significative, et alors que le véhicule est encore contrôlable.

Cette coïncidence permet donc de détecter (et de traiter de façon appropriée) très tôt l'apparition d'un risque de survirage.

Par ailleurs que, de même que cela était envisageable pour la détection d'une situation de sous-virage, on pourra éventuellement, pour conclure à l'apparition effective d'une situation de survirage, prendre également en considération, en sus du critère de comparaison de la dérivée partielle P1 au seuil de survirage Seuil_OS_1, un ou plusieurs autres critères complémentaires, tels que par exemple la valeur à l'instant considéré d'un taux de sous-virage (respectivement d'un taux de survirage) représentatif de l'écart entre la position angulaire réelle du volant et la position angulaire théorique du volant, telle qu'elle devrait correspondre à la situation dynamique du véhicule (par exemple au regard de la vitesse mesurée des roues dudit véhicule).

Comme indiqué précédemment, un tel taux de sous-virage (ou de survirage) pourra par exemple être calculé de la manière décrite dans la demande internationale WO-2010/070229 déposée par la demanderesse.

A titre informatif, on notera que, par simple commodité, les figures 2 et 3 on été établies en considérant que la vitesse absolue du véhicule (c'est-à-dire la norme du vecteur-vitesse du centre de gravité du véhicule, exprimé dans le référentiel terrestre) était constante pendant la prise de virage décrite.

On notera également que, au cours de la seconde période TO-2 d'entrée en survirage, l'accélération latérale $\gamma_{lat}$ du véhicule, qui correspond ici au ressenti (relatif) de la force centrifuge dans le repère attaché au véhicule, telle que ladite force centrifuge serait par exemple perçue par un accéléromètre qui serait embarqué sur le véhicule et qui mesurerait la composante d'accélération latérale portée par la direction transverse (gauche-droite) dudit véhicule, peut, du fait du phénomène de dérive (c'est-à-dire du phénomène de prise d'un angle dit « angle d'attitude » non nul entre la direction longitudinale du véhicule et la direction du vecteur vitesse absolu du centre de gravité dudit véhicule exprimé dans le repère terrestre), s'infléchir (par rapport à la vitesse de lacet $\dot{\psi}$), alors même que l'accélération centrifuge (absolue) du centre de gravité du véhicule, considérée dans le repère fixe terrestre, peut augmenter.

Par ailleurs, on observera que l'évolution (dans le temps) d'une situation de survirage peut dépendre assez fortement de l'évolution (dans le temps) de l'angle volant a, c'est-à-dire en pratique de la réaction du conducteur et/ou, le cas échéant, de la réaction du système de stabilisation automatique de trajectoire qui agit sur la direction.

En effet, si, en situation d'entrée en survirage TO-2, le conducteur maintient ou accentue son braquage (c'est-à-dire augmente l'angle volant $\alpha$ dans le sens du virage), tel que cela est représenté sur les figures 2 et 3 par le scénario « $\alpha 1$ », correspondant aux courbes d'angle volant tracées en tirets longs, alors la situation de survirage tendra à s'aggraver et à évoluer vers une perte d'adhérence (période TO-3 sur la figure 3), au cours de laquelle la vitesse de lacet $\dot{\psi}$ augmente rapidement tandis que l'accélération latérale $\gamma_{lat}$ diminue.

Si en revanche le conducteur « dé-braque » (en ramenant le volant vers sa position centrale), tel que cela est illustré par le scénario « $\alpha 2$ » correspondant aux courbes en tirets courts sur les figures 2 et 3, voire si le conducteur contrebraque (en braquant le volant au-delà de la position centrale, dans le sens opposé au virage, de sorte à orienter les roues dans la direction opposée à celle du virage), tel que cela est illustré par le scénario « $\alpha 3$ » correspondant aux courbes en pointillés sur les figures 2 et 3, alors il est possible que le véhicule retrouve de l'adhérence, ce qui permet d'obtenir une stabilisation (plutôt qu'une aggravation du survirage), c'est-à-dire une reprise de contrôle du véhicule.

Concrètement, une telle stabilisation se traduit par un fléchissement de la vitesse de lacet $\dot{\psi}$ (qui diminue progressivement) tandis que l'accélération latérale $\gamma_{lat}$ augmente de nouveau, tel que cela est illustré sur la fin de la seconde période TO-2 de la figure 2, et également montré en filigrane sur la période TO-3 de la figure 3 pour permettre une comparaison visuelle entre une telle stabilisation « avec reprise d'adhérence » et l'issue contraire « avec perte d'adhérence ».

Compte-tenu de l'incidence importante de l'évolution de l'angle volant sur l'évolution globale du comportement du véhicule en situation de survirage, il peut être particulièrement utile d'identifier et de distinguer ces différents scénarii de survirage, et/ou de percevoir l'évolution du véhicule entre ces différents scenarii au cours du temps.

A cet effet, le procédé comprend de préférence une étape (d) de diagnostic d'une situation de survirage avec réduction de braquage (c'est-à-dire avec « dé-braquage ») OS-1, $\alpha 2$, étape (d) au cours de laquelle on compare la valeur du premier indicateur de perte d'adhérence P1 à un second seuil de survirage Seuil_OS_2 prédéterminé, on calcule un second indicateur de perte d'adhérence P2 qui correspond à la dérivée partielle, par rapport à l'accélération

$$P2 = \frac{\partial \dot{\psi}}{\partial \gamma_{lat}},$$

latérale $\gamma_{lat}$ du véhicule, du paramètre de roulage $\dot{\psi}$ représentatif de la vitesse de lacet :  puis l'on compare la valeur de ce second indicateur P2 à un troisième seuil de survirage prédéterminé Seuil_OS_3, et l'on conclut à une situation de survirage avec réduction de braquage OS-1, $\alpha 2$ si, cumulativement, la valeur du premier indicateur P1 est supérieure au second seuil de survirage Seuil_OS_2 et la valeur du second indicateur P2 est supérieure au troisième seuil de survirage Seuil_OS_3.

En d'autres termes, pour diagnostiquer un survirage avec dé-braquage, il faut que se vérifient simultanément les deux conditions suivantes :

$$P1 = \frac{\partial \dot{\psi}}{\partial \alpha} > Seuil\_OS\_2 \quad \text{et} \quad P2 = \frac{\partial \dot{\psi}}{\partial \gamma_{lat}} > Seuil\_OS\_3 \ .$$

De même que cela a été décrit plus haut pour le premier seuil de survirage, le second seuil de survirage Seuil_OS_2 et/ou le troisième seuil de survirage Seuil_OS_3 pourront de préférence être ajustés dynamiquement, sensiblement en temps réel, en fonction de la vitesse du véhicule et/ou en fonction du couple volant exercé par le conducteur sur le volant de conduite.

L'accélération latérale $\gamma_{lat}$ pourra être obtenue par tout moyen approprié, et notamment mesurée par un accéléromètre embarqué sur le véhicule (et donc attaché au repère du véhicule), ou bien fournie par un autre système embarqué du véhicule (tel qu'un système de freinage anti-blocage ABS, par exemple), ou bien encore calculée à partir d'autres paramètres dynamiques du véhicule.

La dérivée partielle correspondant au second indicateur P2 pourra être calculée (sensiblement en temps réel) en effectuant le quotient de la variation élémentaire du paramètre de roulage $\dot{\psi}$ entre deux instants successifs t1 et t2 proches (de préférence séparés d'une durée qui correspond à la période d'échantillonnage) d'une part et de la variation élémentaire correspondante de l'accélération latérale $\gamma_{lat}$ du véhicule entre ces deux mêmes instants t1 et t2 d'autre part.

On notera par ailleurs que, en variante, on pourra également, tel que cela a été décrit en référence au calcul le premier indicateur P1, utiliser l'angle volant théorique $\alpha_{théorique}$ en lieu et place de la vitesse de lacet $\dot{\psi}$ pour calculer le second indicateur P2 par dérivation vis-à-vis de l'accélération latérale $\gamma_{lat}$, c'est-à-dire que l'on pourra considérer

$$P2 = \frac{\partial \alpha_{theorique}}{\partial \gamma_{lat}},$$

et réaliser une comparaison de cette valeur de dérivée P2 à un second seuil de survirage (et respectivement un troisième seuil de survirage) adapté en conséquence.

Par ailleurs, afin d'améliorer la précision du diagnostic des situations de survirage, le procédé comprend de préférence une étape (e) de diagnostic d'une situation de survirage avec contre-braquage OS-2, $\alpha$3 au cours de laquelle on compare la valeur du premier indicateur de perte d'adhérence P1 à un second seuil de survirage prédéterminé Seuil_OS_2 (le second seuil déjà mentionné plus haut), on calcule un second indicateur de perte d'adhérence P2 (le second indicateur P2 déjà mentionné plus haut) qui correspond à la dérivée partielle, par rapport à l'accélération latérale $\gamma_{lat}$ du véhicule, du paramètre de roulage $\dot{\psi}$ représentatif de la vitesse de lacet, puis l'on compare la valeur de ce second indicateur P2 à un troisième seuil de survirage prédéterminé Seuil_OS_3 (le troisième seuil déjà mentionné plus haut), et l'on compare les signes respectifs de la vitesse de rotation $\dot{\alpha}$ du volant de conduite et de la vitesse de lacet $\dot{\psi}$, puis l'on conclut à une situation de survirage avec contre-braquage OS-2, $\alpha$3 si, cumulativement, la valeur du premier indicateur P1 est supérieure au second seuil de survirage Seuil_OS_2, la valeur du second indicateur P2 est supérieure au troisième seuil de survirage Seuil_OS_3, et les signes de la vitesse de rotation du volant de conduite $\dot{\alpha}$ et de la vitesse de lacet $\dot{\psi}$ sont opposés.

En d'autres termes, pour diagnostiquer un survirage avec contre-braquage, il faut que se vérifient simultanément les trois conditions suivantes :

$$P1 = \frac{\partial \dot{\psi}}{\partial \alpha} > Seuil\_OS\_2$$

et

$$P2 = \frac{\partial \dot{\psi}}{\partial \gamma_{lat}} > Seuil\_OS\_3$$

et $signe(\dot{\alpha}) \rightarrow \leftarrow signe(\dot{\psi})$

ce qui revient en pratique à ajouter la condition d'opposition de signes ( $signe(\dot{\alpha}) \rightarrow \leftarrow signe(\dot{\psi})$) aux deux conditions qui étaient utilisées pour identifier un survirage avec dé-braquage lors de l'étape (d) mentionnée plus haut.

En définitive, le procédé étant de préférence capable de mettre en œuvre toutes les étapes de diagnostic susmentionnées, ledit procédé permettra avantageusement d'opérer avec précision, selon le nombre de conditions remplies, une identification sélective d'une situation de perte d'adhérence parmi plusieurs situations prédéterminées, dont notamment : une situation de sous-virage (caractérisée par les conditions de l'étape (b)), une situation de survirage avec maintien ou accentuation du braquage (caractérisée par les conditions de l'étape (c)), une situation de survirage avec dé-braquage (caractérisée par les conditions de l'étape (d)), ou enfin une situation de survirage avec contre-braquage (caractérisée par les conditions de l'étape (e)).

En d'autres termes, le procédé conforme à l'invention permettra de détecter aussi bien des situations de sous-virage que des situations de survirage, et même, le cas échéant, de distinguer entre plusieurs types (sous-catégories) de situations de survirage.

On notera par ailleurs que, pour parfaire la détection et l'analyse des situations de survirage, le procédé pourra également comprendre une étape (f) de diagnostic d'une situation de survirage avec perte d'adhérence (le véhicule tendant à partir en tête à queue), telle que représentée sur la période TO-3 de la figure 3.

Une telle situation de survirage avec perte d'adhérence sera par exemple définie par la vérification simultanée des trois conditions suivantes :

$$\frac{\partial \dot{\psi}}{\partial t} > 0,$$

l'accélération en lacet est strictement positive

$$\frac{\partial (glissement\_roues\_arrières)}{\partial t} > 0,$$

et                                                                 la dérivée temporelle du glissement des roues arrières est positive, le glissement étant égal au rapport entre d'une part la différence entre la vitesse longitudinale du véhicule $V_{véhicule}$ et la vitesse $V_{roue}$ de la périphérie de la roue, liée à la rotation $\omega$ de ladite roue, et d'autre part la vitesse longitudinale du véhicule :

$$glissement = \frac{V_{véhicule} - V_{roue}}{V_{véhicule}} = \frac{V_{véhicule} - Rayon\_roue \cdot \omega\_roue}{V_{véhicule}}$$

et *abs(couple_volant)* < *SEUIL_Couple,* la valeur absolue du couple, dit « couple volant », exercé par le conducteur sur le volant de conduite est inférieure à un seuil de couple prédéterminé. Ladite valeur de couple volant pourra typiquement être mesurée par tout capteur de couple idoine, par exemple un capteur magnétique mesurant la déformation d'une barre de torsion placée entre le volant et la colonne de direction.

Par ailleurs, l'étape (a) de calcul du premier indicateur P1 sera de préférence inhibée si la variation $\partial \alpha$ de la variable $\alpha$ représentative de la position angulaire du volant de conduite est nulle (ou sensiblement nulle, c'est-à-dire inférieure, en valeur absolue, à un seuil bas prédéterminé, proche de zéro) à l'instant considéré.

Cette inhibition conditionnelle constitue une mesure de sécurité qui permet avantageusement d'éviter l'apparition, dans le cas particulier où $\partial \alpha \approx 0$, d'une divergence (discontinuité) dans le calcul, par dérivation partielle, du premier indicateur P1.

Selon une première possibilité, cette inhibition pourra se traduire par une mise en suspens du rafraîchissement du calcul du premier indicateur P1 à l'instant considéré, ledit indicateur P1 pouvant alors par exemple conserver sa dernière valeur jusqu'à ce qu'un nouveau rafraîchissement soit possible.

Selon une autre possibilité, le procédé pourra commuter temporairement (tant que la variation $\partial \alpha$ est sensiblement nulle) sur un procédé auxiliaire permettant d'évaluer par une autre méthode une situation de survirage ou de sous-virage, par exemple selon le procédé décrit dans la demande internationale WO-2010/070229 déposée par la demanderesse, qui propose de déterminer un taux de survirage en calculant le rapport entre un angle de volant théorique, déterminé à partir de la dynamique du véhicule, et l'angle de volant réel.

Quelle que soit la forme de l'inhibition conditionnelle, le seuil bas utilisé pour décider du déclenchement d'une telle inhibition pourra être réglé lors de la mise au point en usine ou en atelier, et dépendre notamment de paramètres propres au véhicule et au mécanisme de direction, tels que l'empattement, le facteur de démultiplication entre le volant et la crémaillère de direction, etc.

Par ailleurs, de préférence, le signal qui correspond à la variable $\alpha$ représentative de la position angulaire du volant de conduite, le signal qui correspond au premier paramètre de roulage $\dot{\psi}$ représentatif de la vitesse de lacet, et/ou le signal qui correspond au premier indicateur P1 sera filtré, soit temporellement au moyen d'un filtre passe-bas, soit au moyen d'un filtre de validation qui vérifie si le signal concerné reste bien inférieur à une limite supérieure prédéterminée pendant une durée supérieure à un seuil de maintien (seuil de durée) prédéterminé (c'est-à-dire que ledit filtre de validation s'assure que ledit signal s'est maintenu continûment, pendant une durée au moins égale au seuil de maintien, sous ladite limite supérieure, qui correspond à un seuil maximal admissible (ou « plafond ») pour que ledit signal puisse être utilisé dans les calculs propres au procédé).

Dans l'un et l'autre cas, le filtrage a pour effet d'éviter que les perturbations liées aux variations rapides du bruit numérique ne faussent le calcul du premier indicateur P1, ou l'exploitation de la valeur dudit premier indicateur P1, en créant par exemple des faux positifs qui seraient provoqués par des pics temporaires de dérivée.

Bien entendu, l'invention concerne également un système de direction assistée comprenant un mécanisme de direction assistée piloté par un module de gestion capable de mettre en œuvre le procédé selon l'invention.

L'invention concerne également un véhicule automobile, notamment à roues directrices, éventuellement motrices, équipé d'un tel système de direction assistée.

Enfin, l'invention concerne également en tant que tel un support de données lisible par un ordinateur et contenant des éléments de code de programme informatique assurant l'exécution d'un procédé selon l'une quelconque des caractéristiques décrites dans ce qui précède lorsque ledit support est lu par un ordinateur.

Bien entendu, l'invention n'est nullement limitée aux seules variantes de réalisation décrites dans ce qui précède.

**Revendications**

1. Procédé de détection d'une situation de perte d'adhérence d'un véhicule pourvu d'un système de direction manœuvré par un volant de conduite, ledit procédé étant **caractérisé en ce qu'**il comprend une étape (a) d'évaluation d'un premier indicateur de perte d'adhérence (P1) au cours de laquelle on calcule comme premier indicateur de perte

$$( P1 = \frac{\partial \dot{\psi}}{\partial \alpha} ),$$

d'adhérence (P1) la dérivée partielle par rapport à une variable (a) représentative de la position angulaire du volant de conduite, d'un paramètre de roulage qui est représentatif de la vitesse de lacet ($\dot{\psi}$) du véhicule.

2. Procédé selon la revendication 1 **caractérisé en ce que** le paramètre de roulage dont on calcule la dérivée partielle est une mesure ou une estimation de la vitesse de lacet ($\dot{\psi}$) du véhicule à l'instant considéré, par exemple fournie par un système de stabilisation électronique de trajectoire (ESP), ou bien la position angulaire théorique du volant de conduite ($\alpha_{\text{théorique}}$) obtenue à partir de l'angle d'Ackermann ($\alpha_{\text{Ackermann}}$), c'est-à-dire qui correspondrait, en l'absence de dérive, au comportement dynamique du véhicule que l'on observe à l'instant considéré.

3. Procédé selon la revendication 1 ou 2 **caractérisé en ce qu'**il comprend une étape (b) de diagnostic de sous-virage au cours de laquelle on compare la valeur du premier indicateur de perte d'adhérence (P1) à un seuil de sous-virage prédéterminé (Seuil_US), et l'on conclut à une situation de sous-virage si la valeur dudit premier indicateur (P1) est inférieure audit seuil de sous-virage (Seuil_US).

4. Procédé selon l'une des revendications précédentes **caractérisé en ce qu'**il comprend une étape (c) de diagnostic de survirage au cours de laquelle on compare la valeur du premier indicateur de perte d'adhérence (P1) à un premier seuil de survirage prédéterminé (Seuil_OS_1), et l'on conclut à une situation de survirage si la valeur du premier indicateur (P1) est supérieure audit premier seuil de survirage (Seuil_OS_1).

5. Procédé selon l'une des revendications précédentes **caractérisé en ce qu'**il comprend une étape (d) de diagnostic d'une situation de survirage avec réduction de braquage (OS-1, α2) au cours de laquelle on compare la valeur du premier indicateur de perte d'adhérence (P1) à un second seuil de survirage prédéterminé (Seuil_OS_2), on calcule

$$( P2 = \frac{\partial \dot{\psi}}{\partial \gamma_{lat}} ),$$

un second indicateur de perte d'adhérence (P2) qui correspond à la dérivée partielle par rapport à l'accélération latérale du véhicule ($\gamma_{\text{lat}}$), du paramètre de roulage ($\dot{\psi}$) représentatif de la vitesse de lacet, puis l'on compare la valeur de ce second indicateur (P2) à un troisième seuil de survirage prédéterminé (Seuil_OS_3), et l'on conclut à une situation de survirage avec réduction de braquage si, cumulativement, la valeur du premier indicateur est supérieure au second seuil de survirage et la valeur du second indicateur est supérieure au troisième seuil de survirage.

6. Procédé selon l'une des revendications précédentes **caractérisé en ce qu'**il comprend une étape (e) de diagnostic d'une situation de survirage avec contre-braquage (OS-2, α3) au cours de laquelle on compare la valeur du premier indicateur de perte d'adhérence (P1) à un second seuil de survirage prédéterminé (Seuil_OS_2), on calcule un

$$( P2 = \frac{\partial \dot{\psi}}{\partial \gamma_{lat}} ),$$

second indicateur de perte d'adhérence (P2) qui correspond à la dérivée partielle par rapport à l'accélération latérale ($\gamma_{\text{lat}}$) du véhicule, du paramètre de roulage ($\dot{\psi}$) représentatif de la vitesse de lacet, puis l'on compare la valeur de ce second indicateur (P2) à un troisième seuil de survirage prédéterminé (Seuil_OS_3), et l'on compare les signes respectifs de la vitesse de rotation du volant de conduite ($\dot{\alpha}$) et de la vitesse de lacet ($\dot{\psi}$), puis l'on conclut à une situation de survirage avec contre-braquage si, cumulativement, la valeur du premier indicateur est supérieure au second seuil de survirage, la valeur du second indicateur est supérieure au troisième seuil de survirage, et les signes de la vitesse de rotation du volant de conduite et de la vitesse de lacet sont opposés.

7. Procédé selon l'une des revendications précédentes **caractérisé en ce que** l'étape (a) de calcul du premier indicateur (P1) est inhibée si la variation ($\partial \alpha$) de la variable ($\alpha$) représentative de la position angulaire du volant de conduite est nulle à l'instant considéré.

8. Procédé selon l'une des revendications précédentes **caractérisé en ce que** le signal qui correspond à la variable

($\alpha$) représentative de la position angulaire du volant de conduite, le signal qui correspond au premier paramètre de roulage ($\dot\psi$) représentatif de la vitesse de lacet, et/ou le signal qui correspond au premier indicateur (P1), est filtré, soit temporellement au moyen d'un filtre passe-bas, soit au moyen d'un filtre de validation qui vérifie si le signal concerné reste inférieur à une limite supérieure prédéterminée pendant une durée supérieure à un seuil de maintien prédéterminé.

**Patentansprüche**

1. Verfahren zum Detektieren einer Situation eines Haftungsverlustes eines Fahrzeugs, das mit einem Lenksystem versehen ist, das durch ein Lenkrad betätigt wird, wobei das Verfahren **dadurch gekennzeichnet ist, dass** es einen Schritt (a) zum Bewerten eines ersten Haftungsverlustindikators (P1) umfasst, im Laufe dessen man als ersten

$$( P1 = \frac{\partial \dot\psi}{\partial \alpha} )$$

Haftungsverlustindikator (P1) die partielle Ableitung , in Bezug auf eine Variable ($\alpha$), die repräsentativ für die Winkelposition des Lenkrades ist, eines Fahrparameters berechnet, der repräsentativ für die Giergeschwindigkeit ($\dot\psi$) des Fahrzeugs ist.

2. Verfahren nach Anspruch 1, **dadurch gekennzeichnet, dass** der Fahrparameter, dessen partielle Ableitung berechnet wird, eine Messung oder eine Schätzung der Giergeschwindigkeit ($\dot\psi$) des Fahrzeugs zu dem angenommenen Zeitpunkt ist, beispielsweise bereitgestellt durch ein elektronisches Spurstabilisierungsprogramm (ESP), oder aber die theoretische Winkelposition des Lenkrades ($\alpha_{\text{theorique}}$), die ausgehend von dem Ackermannwinkel ($\alpha_{\text{Ackermann}}$) erhalten wird, das heißt, der bei nicht vorhandener Abdrift dem dynamischen Verhalten des Fahrzeugs entspräche, das zum angenommenen Zeitpunkt beobachtet wird.

3. Verfahren nach Anspruch 1 oder 2, **dadurch gekennzeichnet, dass** es einen Schritt (b) zum Diagnostizieren von Untersteuern umfasst, im Laufe dessen der Wert des ersten Haftungsverlustindikators (P1) mit einer vorbestimmten Untersteuerschwelle (Seuil_US) verglichen wird, und eine Situation eines Untersteuerns schlussgefolgert wird, wenn der Wert des ersten Haftungsverlustindikators (P1) kleiner als die Untersteuerschwelle (Seuil_US) ist.

4. Verfahren nach einem der vorstehenden Ansprüche, **dadurch gekennzeichnet, dass** es einen Schritt (c) zum Diagnostizieren von Übersteuern umfasst, im Laufe dessen der Wert des ersten Haftungsverlustindikators (P1) mit einer ersten vorbestimmten Übersteuerschwelle (Seuil_OS_1) verglichen wird, und eine Situation eines Übersteuerns schlussgefolgert wird, wenn der Wert des ersten Haftungsverlustindikators (P1) größer als die erste Übersteuerschwelle (Seuil_OS_1) ist.

5. Verfahren nach einem der vorstehenden Ansprüche, **dadurch gekennzeichnet, dass** es einen Schritt (d) zum Diagnostizieren einer Situation eines Übersteuerns mit Einlenkverringerung (OS-1, $\alpha2$) umfasst, im Laufe dessen der Wert des ersten Haftungsverlustindikators (P1) mit einer zweiten vorbestimmten Übersteuerschwelle

$$( P2 = \frac{\partial \dot\psi}{\partial \gamma_{lat}} )$$

(Seuil_OS_2) verglichen wird, ein zweiter Haftungsverlustindikator (P2), der der partiellen Ableitung in Bezug auf die Seitenbeschleunigung des Fahrzeugs ($\gamma_{lat}$) entspricht, des Fahrparameters ($\dot\psi$) berechnet wird, der repräsentativ für die Giergeschwindigkeit des Fahrzeugs ist, danach der Wert dieses zweiten Indikators (P2) mit einer dritten vorbestimmten Übersteuerschwelle (Seuil_OS_3) verglichen wird, und eine Situation eines Übersteuerns mit Einlenkverringerung schlussgefolgert wird, wenn, kumulativ, der Wert des ersten Indikators größer als die zweite Übersteuerschwelle ist, und der Wert des zweiten Indikators größer als die dritte Übersteuerschwelle ist.

6. Verfahren nach einem der vorstehenden Ansprüche, **dadurch gekennzeichnet, dass** es einen Schritt (e) zum Diagnostizieren einer Situation eines Übersteuerns mit Gegenlenken (OS-2, $\alpha3$) umfasst, im Laufe dessen der Wert des ersten Haftungsverlustindikators (P1) mit einer zweiten vorbestimmten Übersteuerschwelle (Seuil_OS_2) ver-

$$( P2 = \frac{\partial \dot\psi}{\partial \gamma_{lat}} )$$

glichen wird, ein zweiter Haftungsverlustindikator (P2), der der partiellen Ableitung in Bezug auf die Seitenbeschleunigung des Fahrzeugs ($\gamma_{lat}$) entspricht, des Fahrparameters ($\dot\psi$) berechnet wird, der repräsentativ für die Giergeschwindigkeit des Fahrzeugs ist, danach der Wert dieses zweiten Indikators (P2) mit einer dritten vorbestimmten Übersteuerschwelle (Seuil_OS_3) verglichen wird, und die jeweiligen Vorzeichen der Drehgeschwindigkeit des Lenkrades ($\dot{\alpha}$) und der Giergeschwindigkeit ($\dot{\psi}$) verglichen werden, und danach eine Situation eines Übersteuerns mit Gegenlenken schlussgefolgert wird, wenn, kumulativ, der Wert des ersten Indikators größer als die zweite Übersteuerschwelle ist, der Wert des zweiten Indikators größer als die dritte Übersteuerschwelle ist und die Vorzeichen der Drehgeschwindigkeit des Lenkrades und der Giergeschwindigkeit entgegengesetzt sind.

**7.** Verfahren nach einem der vorstehenden Ansprüche, **dadurch gekennzeichnet, dass** der Schritt (a) des Berechnens des ersten Indikators (P1) unterdrückt wird, wenn die Variation ($\partial\alpha$) der Variablen ($\alpha$), repräsentativ für die Winkelposition des Lenkrades, zu dem angenommenen Zeitpunkt null ist.

**8.** Verfahren nach einem der vorstehenden Ansprüche, **dadurch gekennzeichnet, dass** das Signal, das der Variablen ($\alpha$) entspricht, die repräsentativ für die Winkelposition des Lenkrades ist, das Signal, das dem ersten Fahrparameter ($\dot{\psi}$) entspricht, der repräsentativ für die Giergeschwindigkeit ist, und/oder das Signal, das dem ersten Indikator (P1) entspricht, entweder vorübergehend anhand eines Tiefpassfilters, oder anhand eines Validierungsfilters, der überprüft, ob das betroffene Signal während einer Dauer länger als eine vorbestimmte Halteschwelle kleiner als ein vorbestimmter oberer Grenzwert bleibt, gefiltert wird.

## Claims

**1.** A method for detecting a situation of loss of grip of a vehicle provided with a steering system operated by a steering wheel, said method being **characterized in that** it comprises a step (a) of evaluating a first indicator of loss of grip (P1) comprising calculating, as the first indicator of loss of grip (P1), the partial derivative $(P1 = \dfrac{\partial\dot{\psi}}{\partial\alpha})$, relative to a variable ($\alpha$) representative of the angular position of the steering wheel, of a driving parameter which is representative of the yaw rate ($\dot{\psi}$) of the vehicle.

**2.** The method according to claim 1, **characterized in that** the driving parameter whose partial derivative is calculated, is a measurement or an estimation of the yaw rate ($\dot{\psi}$) of the vehicle at a given instant, for example provided by an electronic path stabilization system (ESP), or the theoretical angular position of the steering wheel ($\alpha_{theoretical}$) obtained from the angle of Ackermann ($\alpha_{Ackermann}$), that is to say which would correspond, in the absence of drift, to the dynamic behavior of the vehicle which is observed at the given instant.

**3.** The method according to claim 1 or 2, **characterized in that** it comprises an understeer diagnosis step (b) during which the value of the first indicator of loss of grip (P1) is compared with a predetermined understeer threshold (Threshold_US), and an understeer situation is concluded if the value of said first indicator (P1) is less than said understeer threshold (Threshold_US).

**4.** The method according to any of the preceding claims, **characterized in that** it comprises an oversteer diagnosis step (c) during which the value of the first indicator of loss of grip (P1) is compared with a first predetermined oversteer threshold (Threshold_OS_1), and an oversteer situation is concluded if the value of the first indicator (P1) is greater than said first oversteer threshold (Threshold_OS_1).

**5.** The method according to any of the preceding claims, **characterized in that** it comprises step (d) of diagnosing an oversteer situation with steering reduction (OS-1, $\alpha2$), comprising comparing the value of the first indicator of loss of grip (P1) with a predetermined second oversteer threshold (Threshold_OS_2), calculating a second indicator of loss of grip (P2) which corresponds to the partial derivative $(P2 = \dfrac{\partial\dot{\psi}}{\partial\gamma_{lat}})$, relative to the lateral acceleration ($\gamma_{lat}$) of the vehicle, of the driving parameter ($\dot{\psi}$) representative of the yaw rate, and then comparing the value of this second indicator (P2) with a third predetermined oversteer threshold (Threshold_OS_3), and concluding an oversteer situation with a steering reduction if, cumulatively, the value of the first indicator is greater than the second oversteer threshold and the value of the second indicator is greater than the third oversteer threshold.

**6.** The method according to any of the preceding claims, **characterized in that** it comprises a step (e) of diagnosing an oversteer situation with a countersteering (OS-2, $\alpha 3$) comprising comparing the value of the first indicator of loss of grip (P1) with a predetermined second oversteer threshold (Threshold_OS_2), calculating a second indicator of

$$( P2 = \frac{\partial \dot{\psi}}{\partial \gamma_{lat}} ),$$

loss of grip (P2) which corresponds to the partial derivative $\frac{\partial \dot{\psi}}{\partial \gamma_{lat}}$ relative to the lateral acceleration ($\gamma_{lat}$) of the vehicle, of the driving parameter ($\dot{\psi}$) representative of the yaw rate, and then comparing the value of this second indicator (P2) with a third predetermined oversteer threshold (Threshold_OS_3), and comparing the respective signs of the speed of rotation of the steering wheel ($\dot{\alpha}$) and the yaw rate ($\dot{\psi}$), and then concluding an oversteer situation with a countersteering if, cumulatively, the value of the first indicator is greater than the second oversteer threshold, the value of the second indicator is greater than the third oversteer threshold, and the signs of the speed of rotation of the steering wheel and of the yaw rate are opposite.

7.  The method according to any of the preceding claims, **characterized in that** step (a) of calculating the first indicator (P1) is inhibited if the variation ($\partial \alpha$) of the variable ($\alpha$) representative of the angular position of the steering wheel is zero at the given instant.

8.  The method according to any of the preceding claims, **characterized in that** the signal which corresponds to the variable ($\alpha$) representative of the angular position of the steering wheel, the signal which corresponds to the first driving parameter ($\dot{\psi}$) representative of the yaw rate, and/or the signal which corresponds to the first indicator (P1), is filtered either temporally by means of a low-pass filter or by means of a validation filter which checks whether the concerned signal remains less than a predetermined upper limit for a duration greater than a predetermined maintaining threshold.

Vitesse de lacet $\dot{\psi}$
Angle de volant $\alpha$

*Fig. 1*

TU-1   TU-2   TU-3

temps

Accélération latérale $\gamma_{lat}$
Vitesse de lacet $\dot{\psi}$
Angle de volant $\alpha$

Reprise d'adhérence / stabilisation

$\dot{\psi}$

$\gamma_{lat}$

$\alpha_1$ braquage

$\alpha_2$ dé-braquage

temps

$\alpha_3$ contrebraquage

*Fig. 2*

TO-1   TO-2   TO-3

Accélération latérale $\gamma_{lat}$
Vitesse de lacet $\dot{\psi}$
Angle de volant $\alpha$

*Fig. 3*

$\dot{\psi}$ avec perte d'adhérence

$\dot{\psi}$ avec reprise d'adhérence

$\gamma_{lat}$ avec reprise d'adhérence

$\gamma_{lat}$ avec perte d'adhérence

$\alpha_1$ braquage

$\alpha_2$ dé-braquage

temps

$\alpha_3$ contrebraquage

TO-1

TO-2

TO-3

Vitesse de lacet $\dot{\psi}$  N

OS-2

OS-1

OS

N0

SURVIRAGE

L2

SURVIRAGE
AVEC CONTREBRAQUAGE

O

L1

US-1

SOUS-VIRAGE

Angle volant $\alpha$

W

E

SOUS-VIRAGE

SURVIRAGE
AVEC CONTREBRAQUAGE

SURVIRAGE

*Fig. 4*

S

## RÉFÉRENCES CITÉES DANS LA DESCRIPTION

### Documents brevets cités dans la description

- WO 2004005093 A1
- FR 2992937
- WO 2010070229 A